# EUROPEAN PATENT SPECIFICATION

(11) **EP 0 775 729 B1**
(45) Date of publication and mention of the grant of the patent: **14.01.2004**
(21) Application number: 96307313.5
(22) Date of filing: 08.10.1996
(51) Int. Cl.: C09B 67/28, C09B 1/28

(54) **Process for making solutions of anthraquinone blue colourants**
Verfahren zur Herstellung von Lösungen von blauen Anthrachinonfarbstoffen
Procédé pour la préparation de solutions de colorants anthraquinones bleus

(30) Priority: 23.11.1995 GB 9524006
(43) Date of publication of application: 28.05.1997
(73) Proprietor: ROHM AND HAAS (UK) LIMITED, Croydon CR9 3NB (GB)
(72) Inventor: Baxter, David Roderick, Mirfield, West Yorkshire WF14 0EX (GB); Cranmer, Peter John, Mirfield, West Yorkshire WF14 8PZ (GB)
(74) Representative: Bankes, Stephen Charles Digby

(56) References cited:
- EP-A- 0 415 859
- DE-A- 2 209 984
- FR-A- 2 694 564
- GB-A- 1 094 925
- US-A- 2 050 662
- US-A- 3 247 229

## Description

This invention relates to a process for producing a solution in an aromatic solvent of an aminoanthraquinone dye, by reacting an amine with leucoquinizarin or with a mixture of quinizarin and leucoquinizarin.

The aminoanthraquinones to which the invention relates have the general formula I: 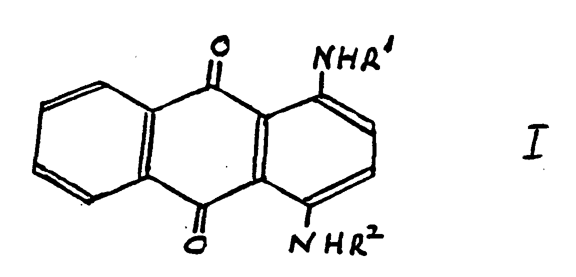 wherein R¹ and R², may be the same or different and each represents a C₁ - C₁₈ alkyl group which may be substituted, for example with one or more alkoxy groups. Such compounds have particular utility as colourants for petroleum products. A typical colourant comprises a mixture of compounds of the above general formula.

Compounds of general formula (I) can be made by reacting quinizarin with one or more primary amines. The overall reaction is as follows: 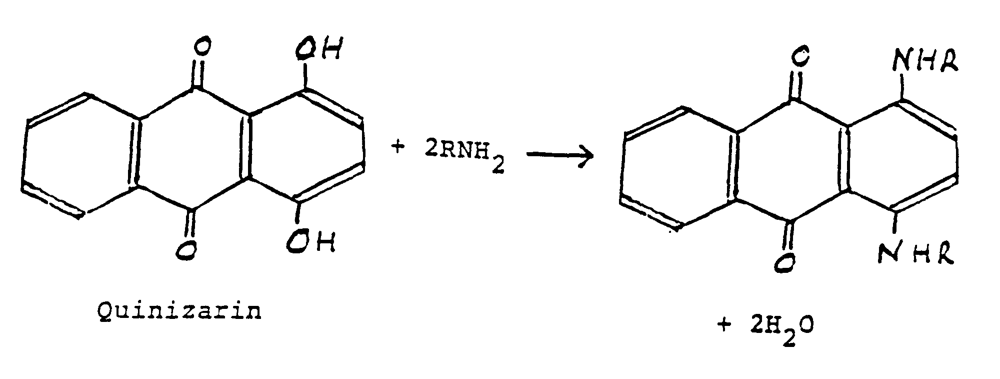 wherein R represents any of the same groups as R¹ and R² above. A mixed product can be produced by using a mixture of amines, and particular physical properties can be produced by selecting the proportions of different amines used. Thus, if amines R¹NH₂ and R²NH₂ are used, the relative proportions of each can be selected to give the desired mixture of 1,4-di(R¹-amino)-, 1,4-di(R²-amino)- and 1-R¹-amino, 4-R²-aminoanthraquinones for a particular application.

Reactions of this type have hitherto been carried out in an aromatic carrier solvent such as xylene, using a large excess of the amines. This has the advantage that the organic solvent does not have to be separated since the final product is normally sold in solution in an aromatic solvent. However there are also considerable disadvantages. The reaction proceeds slowly and the water generated generally has to be removed as the reaction proceeds, for example by azeotropic distillation, in order to drive the reaction to completion. During this time side reactions produce undesirable residues which remain in the product.

In EP-A-415 859 the reaction is carried out in 2-ethoxyethanol as solvent, using a 5 :1 molar excess of amine to quinizarin / leucoquinizarin. In FR-A-26 94 564 a much larger molar excess is used, the reaction being initially carried out under reflex without any added solvent. DE-A-2 209 984 discloses the use of a glycol or monoglycol ether as the solvent, still with a substantial molar excess of amine.

The present invention consists in a process for producing a solution in an aromatic solvent of an aminoanthraquinone dye having the general formula I: 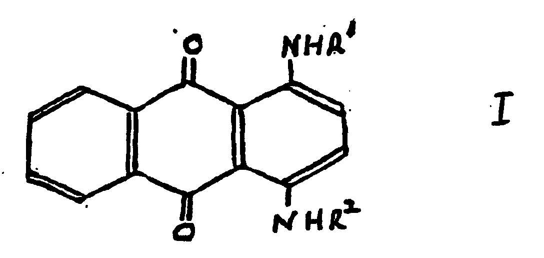 wherein R¹ and R² may be the same or different and each represents a C₁ - C₁₈ alkyl group which may be substituted, said process comprising the steps of:
reacting a starting compound comprising leucoquinizarin or a mixture of quinizarin and leucoquinizarin, with one or more aliphatic amines in the presence of a solvent comprising a glycol or a glycol ether and in the absence of any aromatic solvent;
passing air through the reaction mixture;
removing water and any excess amine from the reaction mixture and
adding said aromatic solvent to the mixture,
wherein 2.05 to 2.5 moles of amine are reacted with each mole of said starting compound.

The glycol and/or glycol ether replaces all of the aromatic solvent used in the prior art process. A smaller quantity of glycol/glycol ether can be used than the quantity of solvent used previously, and the excess of amine can be smaller. The prior art process using aromatic solvents generally required 3 to 4 moles of amine per mole of quinizarin/leuco quinizarin, representing a 1 to 2 molar excess. The process of the present invention requires only 2.05 to 2.50 moles of amine per mole of starting compound, preferably 2.10 to 2.20 moles.

A further advantage of the process of the invention is that water does not have to be removed from the system during the reaction. The glycol or glycol ether is miscible both with the water and with the dye, and acts as a phase transfer agent to give a more homogeneous system.

Any suitable liquid glycol and/or glycol ether can be used. A preferred compound is dipropylene glycol monomethyl ether, which has low toxicity compared to, for example, ethylene glycol.

Any desired aliphatic amine or mixture of amines may be used, depending on the desired property of the product. Of particular interest for the purposes of the invention are the amines disclosed in US-A-3,597,254, which are reacted in various combinations with quinizarin and/or leucoquinizarin to give blue dyes comprising mixtures of 3 or more 1,4-diaminoanthraquinones. These amines may be substituted and include n-butylamine, isoamylamine, 2-ethyl-n-hexylamine, n-octylamine, decylamine, n-hexylamine, n-dodecylamine, 2-methoxyethylamine, 3-methoxypropylamine, 3-ethoxypropylamine, 3-butoxypropylamine and 3-(2'-ethylhexoxy)-propylamine. Other amines which may be used include lower alkyl amines such as methylamine and other isomers of amylamine such as n-amylamine.

The reaction preferably takes place at elevated temperature, suitably 70 to 120°C and typically at about 100°C.

At the end of the reaction, after removal of unwanted components such as water and excess amines, and possibly glycol or glycol ether, the dye is dissolved in a carrier solvent to the desired concentration. A typical final product comprises a 40% solution of the dye in an aromatic solvent such as xylene or a naphthenic solvent, selected for its high flash point and low toxicity.

The invention will be further illustrated by the following examples, in which all reactants are at 100%.

### Example 1

A mixture of 144.0g quinizarin, 16.0g leucoquinizarin, 66g dipropylene glycol mono methyl ether (DPM), 55.8g 2-ethyl hexylamine, 38.4g 3-methoxypropylamine, 31.4g amylamine and 6.7g methylamine were gradually heated, with stirring, to 100°C over about 1 hour 40 minutes and maintained at 100°C for a further 2 hours. The product was cooled to 85°C and air passed through for 3 hours. The excess amines and water of reaction were removed by vacuum distillation and 216g of a high flash aromatic solvent added. The product was screened to remove any insoluble material.

### Example 2

A mixture of 96.1g quinizarin, 24.2g leucoquinizarin, 50g DPM, 85.9g 2-ethylhexylamine, 24.7g amylamine and 4.2g methylamine was heated to 100°C over 2 hours and maintained at 100°C until the reaction was complete. The reaction mass was cooled to 95°C and air passed through for 1 hour. The excess amines and water of reaction were removed by vacuum distillation and 214g of xylene were added to adjust the strength. The product was screened to remove any insoluble material.

### Example 3

A mixture of 96.1g quinizarin, 24.2g leucoquinizarin, 50g DPM, 89.6g 2-ethylhexylamine and 31.5g amylamine was heated to 100°C over 2 hours and maintained at 100°C for 5 hours until the reaction was complete. The reaction mass was cooled to 95°C and air passed through for 1 hour. The excess amines and water of reaction were removed by vacuum distillation and high flash aromatic solvent added to adjust the strength. The product was screened to remove any insoluble material.

## Claims

1. A process for producing a solution in an aromatic solvent of an aminoanthraquinone dye having the general formula I: 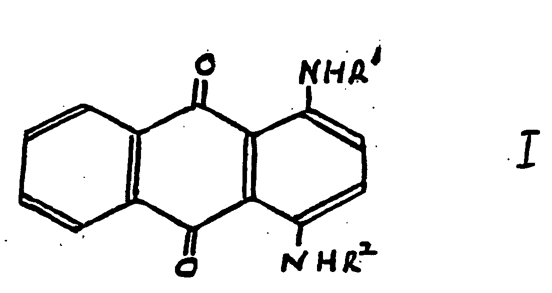 wherein R¹ and R², may be the same or different and each represents a C₁ - C₁₈ alkyl group which may be substituted, said process comprising the steps of:
reacting a starting compound comprising leucoquinizarin or a mixture of quinizarin and leucoquinizarin, with one or more aliphatic amines in the presence of a solvent comprising a glycol or a glycol ether and in the absence of any aromatic solvent;
passing air through the reaction mixture;
removing water and any excess amine from the reaction mixture and
adding said aromatic solvent to the mixture,
wherein 2.05 to 2.5 moles of amine are reacted with each mole of said starting compound.

2. A process as claimed in claim 1 wherein at least one of said groups R¹ and R² is an alkoxy substituted alkyl group.

3. A process as claimed in any preceding claim wherein the starting compound is reacted with a mixture of different aliphatic amines to give a mixture of different anthraquinones.

4. A process as claimed in claim 4 wherein 2.10-2.20 moles of amine are reacted with each mole of said starting compound.

5. A process as claimed in any preceding claim wherein said solvent comprises dipropylene glycol monomethyl ether.

6. A process as claimed in any preceding claim wherein said amine is selected from methylamine, n-butylamine, amylamine, 2-ethyl-n-hexylamine, n-octylamine, decylamine, n-hexylamine, n-dodecylamine, 2-methoxyethylamine, 3-methoxypropylamine, 3-ethoxypropylamine, 3-butoxypropylamine and 3-(2'-ethylhexoxy)-propylamine.

7. A process as claimed in any preceding claim wherein the reaction takes place at a temperature from 70 to 120°C.

8. A process as claimed in claim 1 wherein said aromatic solvent is selected from xylene and naphthenic solvents and mixtures thereof.

## Patentansprüche

1. Verfahren zur Herstellung einer Lösung in einem aromatischen Lösungsmittel eines Aminoanthrachinon-Farbstoffs mit der allgemeinen Formel I: 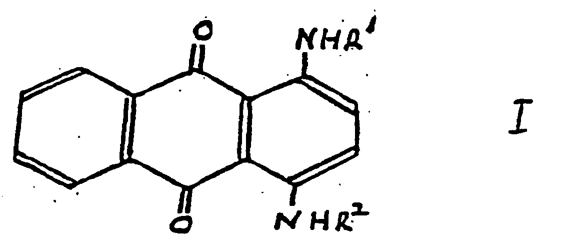 worin die Reste R¹ und R² gleich oder unterschiedlich sein können, und jeder einen C₁ - C₁₈ Alkylrest darstellt, der substituiert sein kann, wobei das Verfahren die Schritte umfaßt:
Umsetzen einer Ausgangsverbindung, umfassend Leukochinizarin oder ein Gemisch von Chinizarin und Leukochinizarin mit einem oder mehreren aliphatischen Aminen in der Gegenwart eines Lösungsmittels, umfassend ein Glykol oder einen Glykolether, und in der Abwesenheit von jedwedem aromatischen Lösungsmittel,
Durchleiten von Luft durch das Reaktionsgemisch,
Entfernen von Wasser und jedwedem Überschuß Amin von dem Reaktionsgemisch und
Zugeben des aromatischen Lösungsmittels zu dem Gemisch, wobei 2,05 bis 2,5 Mol Amin mit jedem Mol der Ausgangsverbindung umgesetzt werden.

2. Verfahren nach Anspruch 1, wobei mindestens einer der Reste R¹ und R² ein Alkoxy-substituierter Alkylrest ist.

3. Verfahren nach einem vorhergehenden Anspruch, wobei die Ausgangsverbindung mit einem Gemisch von unterschiedlichen aliphatischen Aminen unter Erhalten eines Gemisches von unterschiedlichen Anthrachinonen umgesetzt wird.

4. Verfahren nach Anspruch 3, wobei 2,10-2,20 Mol Amin mit jedem Mol der Ausgangsverbindung umgesetzt werden.

5. Verfahren nach einem vorhergehenden Anspruch, wobei das Lösungsmittel Dipropylenglykolmonomethylether umfaßt.

6. Verfahren nach einem vorhergehenden Anspruch, wobei das Amin aus Methylamin, N-Butylamin, Amylamin, 2-Ethyl-n-hexylamin, N-Octylamin, Decylamin, N-Hexylamin, N-Dodecylamin, 2-Methoxyethylamin, 3-Methoxypropylamin, 3-Ethoxypropylamin, 3-Butoxypropylamin und 3-(2'-Ethylhexoxy)-propylamin ausgewählt ist.

7. Verfahren nach einem vorhergehenden Anspruch, wobei die Umsetzung bei einer Temperatur von 70 bis 120°C stattfindet.

8. Verfahren nach Anspruch 1, wobei das aromatische Lösungsmittel aus Xylol und naphthylenischen Lösungsmitteln und Gemischen davon ausgewählt ist.

## Revendications

1. Procédé de production d'une solution dans un solvant aromatique d'un colorant d'aminoanthraquinone répondant à la formule générale I : 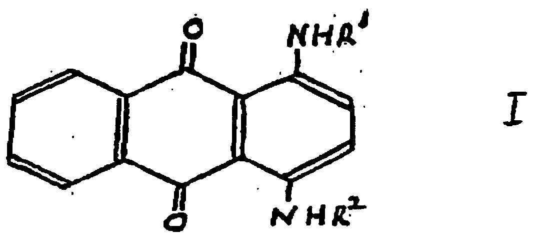 où R¹ et R² peuvent être identiques ou différents et représentent chacun un groupe alkyle en C₁ à C₁₈, qui peut être substitué, ledit procédé comprenant les étapes de :
faire réagir un composé de départ comprenant de la leucoquinizarine ou un mélange de quinizarine et de leucoquinizarine, avec une ou plusieurs amines aliphatiques en présence d'un solvant comprenant un glycol ou un éther de glycol et en l'absence de tout solvant aromatique ;
faire passer de l'air à travers le mélange réactionnel ;
éliminer l'eau et toute amine en excès du mélange réactionnel et
ajouter ledit solvant aromatique au mélange, dans lequel on fait réagir 2,05 à 2,5 moles d'amine avec chaque mole dudit composé de départ.

2. Procédé selon la revendication 1, dans lequel au moins un desdits groupes R¹ et R² est un groupe alkyle substitué par un groupe alcoxy.

3. Procédé selon l'une quelconque des revendications précédentes, dans lequel on fait réagir le composé de départ avec un mélange d'amines aliphatiques différentes pour donner un mélange d'anthraquinones différentes.

4. Procédé selon la revendication 4, dans lequel on fait réagir 2,10 à 2,20 moles d'amine avec chaque mole dudit composé de départ.

5. Procédé selon l'une quelconque des revendications précédentes, dans lequel ledit solvant comprend un éther monométhylique de dipropylène glycol.

6. Procédé selon l'une quelconque des revendications précédentes, dans lequel ladite amine est choisie parmi la méthylamine, la n-butylamine, l'amylamine, la 2-éthyl-n-hexylamine, la n-octylamine, la décylamine, la n-hexylamine, la n-dodécylamine, la 2-méthoxyéthylamine, la 3-méthoxypropylamine, la 3-éthoxypropylamine, la 3-butoxypropylamine et la 3-(2'-éthylhexoxy)-propylamine.

7. Procédé selon l'une quelconque des revendications précédentes, dans lequel la réaction a lieu à une température de 70 à 120 °C.

8. Procédé selon la revendication 1, dans lequel ledit solvant aromatique est choisi parmi le xylène, les solvants naphténiques et leurs mélanges.
